(19) Europäisches Patentamt
European Patent Office
Office européen des brevets

(11) **EP 2 411 735 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(21) Anmeldenummer: **10711874.7**

(22) Anmeldetag: **23.03.2010**

(51) Int Cl.:
***F22G 5/12*** *(2006.01)*

(86) Internationale Anmeldenummer:
**PCT/EP2010/053741**

(87) Internationale Veröffentlichungsnummer:
**WO 2010/108904 (30.09.2010 Gazette 2010/39)**

(54) **VERFAHREN UND VORRICHTUNG ZUM REGELN DER TEMPERATUR VON DAMPF FÜR EINE DAMPFKRAFTANLAGE**

METHOD AND DEVICE FOR REGULATING THE TEMPERATURE OF STEAM FOR A STEAM POWER PLANT

PROCÉDÉ ET DISPOSITIF DE RÉGLAGE DE LA TEMPÉRATURE DE LA VAPEUR POUR UNE CENTRALE À VAPEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.03.2009 EP 09155997**

(43) Veröffentlichungstag der Anmeldung:
**01.02.2012 Patentblatt 2012/05**

(73) Patentinhaber: **Siemens Aktiengesellschaft 80333 München (DE)**

(72) Erfinder:
• **TREUER, Michael**
  **73547 Lorch (DE)**

• **MEERBECK, Bernhard**
  **65779 Kelkheim (DE)**
• **RUPP, Joachim**
  **76297 Stutensee (DE)**
• **WEISSBACH, Tobias**
  **73614 Schorndorf (DE)**
• **WENDELBERGER, Klaus**
  **68789 St. Leon-Rot (DE)**

(56) Entgegenhaltungen:
EP-A2- 0 285 297     GB-A- 2 449 998
US-A- 4 241 701     US-A1- 2002 065 791

**Beschreibung**

Die Erfindung betrifft ein Verfahren zum Regeln der Temperatur von Dampf für eine Dampfkraftanlage, bei dem ein Zustandsregler mehrere Dampfzustände in einem Überhitzer zum Überhitzen des Dampfs mit Hilfe eines Beobachters, der diese Zustände berechnet, zur Ausgabe einer Dampfsolltemperatur als Stellgröße zurückführt, und die Dampfsolltemperatur an einen weiteren Regler zur Regelung der Temperatur weitergegeben wird.

Der Wirkungsgrad einer Dampfkraftwerksanlage steigt mit der Temperatur des im Kraftwerkkessel erzeugten Dampfes. Allerdings dürfen zulässige Temperaturmaximalgrenzen des Kesselrohrmaterials sowie einer Turbine, die mit dem Dampf beaufschlagt werden soll, nicht überschritten werden. Je genauer die Temperatur bei ihrem Sollwert gehalten werden kann, desto näher kann der Sollwert an der zulässigen Temperaturgrenze liegen, d.h. ein desto höherer Wirkungsgrad kann beim Betrieb der Kraftwerksanlage erreicht werden. Eine Dampftemperaturregelung nach dem Stand der Technik wird in der GB 2 449 998 A beschrieben.

Die Überhitzung des Dampfes im Kessel erfolgt dadurch, dass der Dampf in mehreren Stufen durch beheizte Rohrbündel geleitet wird - den so genannten Überhitzerstufen. Die Regelung der Dampftemperatur erfolgt durch Einspritzen von Wasser in die Dampfleitung vor den Überhitzerstufen über entsprechende Einspritzventile. Die Überhitzer mit ihren großen Eisenmassen weisen ein sehr träges Verhalten auf. Ein Verstellen des Einspritzventils wirkt sich erst nach mehreren Minuten auf die zu regelnde Temperatur aus. Die Zeitverzögerung ist dabei nicht konstant, sondern hängt vom aktuellen Dampfmassenstrom ab. Zusätzlich wird die zu regelnde Temperatur durch zahlreiche Störungen wie z.B. Laständerungen, Rußblasen im Kessel, Wechsel des Brennstoffes, usw., stark beeinflusst. Eine genaue Temperaturregelung ist aus diesen Gründen schwer zu erreichen.

Zur Lösung dieses Problems ist die so genannte Kaskadenregelung bekannt, bei der zwei ineinander geschachtelte PI-Regelkreise aufgebaut werden. Ein äußerer, langsamer PI-Regler regelt die Temperatur am Überhitzeraustritt und gibt einen Sollwert für die Temperatur am Überhitzereintritt - d.h. nach der Einspritzung - vor. Die Temperatur am Überhitzereintritt wird von einem inneren, schnellen PI-Regler geregelt, der das Einspritzventil verstellt. Damit können Störungen der Dampftemperatur am Eintritt der Einspritzung schnell ausgeregelt werden. Der Nachteil dieses Konzeptes besteht darin, dass Störungen, die auf den Überhitzer selbst wirken, nur im äußeren, langsamen Kreis - d.h. mit geringer Regelgüte - ausgeregelt werden können.

Es ist eine Aufgabe der Erfindung, ein Verfahren anzugeben, mit dem die Dampftemperatur sowohl genau als auch stabil geregelt werden kann.

Diese Aufgabe wird dadurch gelöst, dass der Zustandsregler erfindungsgemäß ein linear-quadratischer Regler ist. Bei einem solchen Linear Quadratic Regulator (LQR), oder anders ausgedrückt: einer linear-quadratischen optimalen Zustandsrückführung, handelt es sich um einen Zustandsregler, dessen Parameter derart bestimmt werden können, dass ein Gütekriterium für die Regelqualität optimiert wird. Hierdurch kann sowohl eine genaue als auch stabile Regelung erreicht werden. Die Erfindung geht hierbei von der Überlegung aus, dass bei der Zustandsregelung mehrere - teilweise nicht messbare - Zustände zur Ermittlung des Reglerstellsignals zurückgeführt werden. Für den vorliegenden Anwendungsfall bedeutet dies, dass auch die Temperaturen an mehreren Stellen entlang des Überhitzers im Algorithmus verwendet werden. Da diese Temperaturen jedoch nicht messbar sind, wird eine Beobachterschaltung benötigt, mit deren Hilfe die benötigten Temperaturwerte geschätzt bzw. errechnet werden können. Die Begriffe "schätzen", "berechnen" und "ermitteln" werden im Folgenden als Synonyme verwendet. Der Vorteil dieses Konzepts besteht darin, dass sehr schnell und akkurat auf Störungen, die auf den Überhitzer wirken, reagiert werden kann.

Die Dampfkraftanlage ist eine mit Dampfkraft betriebene Anlage. Sie kann eine Dampfturbine, eine Dampfprozessanlage oder jede andere Anlage sein, die mit Energie aus Dampf betrieben wird.

Als ein Zustandsregler kann im Folgenden ein Regelkreis verstanden werden, der die Regelgröße auf der Grundlage einer Zustandsraumdarstellung regelt. Dabei wird der Zustand der Regelstrecke durch einen Beobachter der Regelstrecke zugeführt, also zurückgeführt. Die Rückführung, die zusammen mit der Regelstrecke den Regelkreis bildet, geschieht durch den Beobachter, der eine Messeinrichtung ersetzt, und den eigentlichen Zustandsregler. Der Beobachter berechnet die Zustände des Systems, in diesem Fall des Dampfs im Überhitzer. Der Beobachter umfasst eine Zustands-Differentialgleichung, eine Ausgangsgleichung und einen Beobachtervektor. Der Ausgang des Beobachters wird mit dem Ausgang der Regelstrecke verglichen. Die Differenz wirkt über den Beobachtervektor auf die Zustands-Differentialgleichung.

In einer vorteilhaften Ausführungsform der Erfindung ist der Beobachter ein Kalman-Filter, der auf die linearquadratische Zustandsrückführung ausgelegt ist. Das Zusammenspiel des LQR mit dem Kalman-Filter wird als LQG (Linear Quadratic Gaussian)-Algorithmus bezeichnet.

Vorteilhafterweise wird die Störgröße der durch den Überhitzer in den Dampf eingetragene Wärme als Zustand definiert und im Regelalgorithmus verwendet. Hierbei können nicht nur die Temperaturen oder ein davon abgeleiteter Parameter entlang des Überhitzers sondern zusätzlich die Störgröße als Zustand definiert werden und insbesondere mit Hilfe des Beobachters geschätzt bzw. ermittelt werden. Störungen, die direkt auf den Überhitzer wirken, drücken sich dadurch aus, dass sich die Aufwärmspanne im Überhitzer verändert. Durch eine solche Beobachtung der Störgrößen ist eine sehr schnelle, akkurate aber gleichzeitig robuste Reaktion auf entsprechende Störungen möglich.

Eine weitere vorteilhafte Ausgestaltung der Erfindung sieht vor, dass als Zustandsgrößen Enthalpien des Dampfs verwendet werden. Durch die Verwendung der Enthalpien anstelle von Dampftemperaturen kann das Regelsystem linearisiert und dadurch einer einfacheren Berechnung zugänglich gemacht werden. Das LQR-Verfahren bezieht sich auf lineare Regelungsprobleme. Die Temperatur am Eintritt in den Überhitzer wirkt aber durch die Aufnahme von Wärme in nichtlinearer Weise auf die Regelgröße Temperatur am Austritt. Durch konsequente Umrechnung insbesondere aller Temperaturmess- und -sollwerte auf Enthalpien wird eine Linearisierung des Regelungsproblems erreicht, denn zwischen Eintritts- und Austrittsenthalpie besteht ein linearer Zusammenhang. Die Umrechnung erfolgt dabei zweckmäßigerweise mit Hilfe entsprechender Wasser-/Dampf-Tafel-Beziehungen unter Verwendung des gemessenen Dampfdruckes. Durch diese Linearisierung wird ein sehr robustes Regelverhalten erzielt, d.h. die Regelqualität hängt nicht mehr vom aktuellen Betriebspunkt der Anlage ab.

Außerdem wird vorgeschlagen, dass die Zustandsrückführung über eine Matrixgleichung erfolgt, deren Parameter zumindest teilweise unter Verwendung aktueller Messwerte bestimmt werden. Durch eine Online-Berechnung der Rückführmatrix kann sich der Regler ständig an die tatsächlichen Betriebsbedingungen anpassen. Beispielsweise wird dadurch einer lastabhängigen Änderung des dynamischen Überhitzerverhaltens automatisch Rechnung getragen. Auch durch diesen Schritt kann eine Erhöhung der Robustheit des Regelalgorithmus erzielt werden. Aufgrund der Tatsache, dass der Regleralgorithmus sehr robust ist, müssen bei der Inbetriebsetzung nur sehr wenige Parameter eingestellt werden. Inbetriebsetzungszeit und -aufwand ist gegenüber allen bislang bekannten Verfahren daher erheblich reduziert.

Vorteilhafterweise wird die Matrixgleichung durch eine Leittechnik der Dampfkraftanlage berechnet. Die Leittechnik kann hierbei ein Steuersystem sein, das die Dampfkraftanlage in ihrem regulären Betrieb steuert. Um die mathematischen Bausteine der Leittechnik einfach zu halten, ist es vorteilhaft, wenn die Matrixgleichung in einen Satz skalarer Differentialgleichungen überführt wird. Eine relativ einfache Integration der Matrixgleichung kann durch eine Integration rückwärts über die Zeit erreicht werden. Da im Realfall keine Information aus der Zukunft zur Verfügung steht, kann eine der Rückwärtsintegration äquivalente Integration erreicht werden, wenn der Satz skalarer Differentialgleichungen mit umgekehrtem Vorzeichen integriert wird, was stabil zur selben stationären Lösung führt.

Die Erfindung betrifft außerdem eine Vorrichtung zum Regeln der Temperatur von Dampf für eine Dampfkraftanlage mit einem Zustandsregler zur Ausgabe einer Dampfsolltemperatur als Stellgröße durch Zurückführen mehrerer Dampfzustände eines Überhitzers zum Überhitzen des Dampfs, einem Beobachter, der diese Zustände berechnet, und einem weiteren Regler zur Regelung der Temperatur anhand der Dampfsolltemperatur.

Es wird vorgeschlagen, dass der Zustandsregler ein linear-quadratischer Regler ist. Es kann eine genaue und stabile Regelung erreicht werden.

Vorteilhafterweise ist die Vorrichtung dazu ausgelegt, einen, mehrere oder alle der oben vorgeschlagenen Verfahrensschritte auszuführen.

Die Erfindung wird anhand von Ausführungsbeispielen näher erläutert, die in den Zeichnungen dargestellt sind.
Es zeigen:

FIG 1    einen Ausschnitt aus einem Dampfkraftwerk mit einem Überhitzer,

FIG 2    ein Schema einer Regelkaskade,

FIG 3    ein Modell des Überhitzers,

FIG 4    ein lineares Streckenmodell als Grundlage für eine Reglerentwurf,

FIG 5    eine Struktur eines Beobachters und

FIG 6    eine Übersicht über einen Regleraufbau.

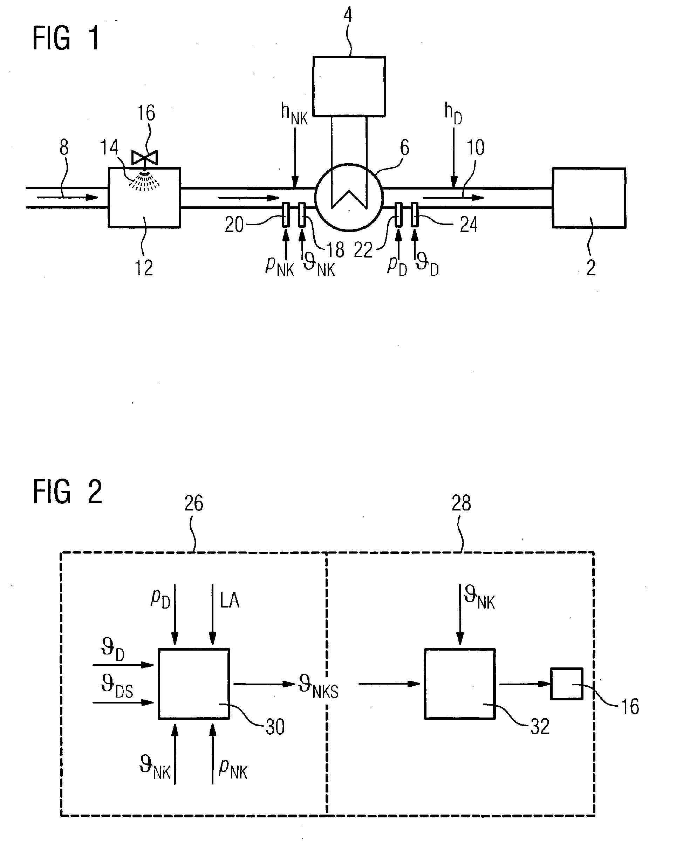

FIG 1 zeigt eine schematische Darstellung eines Ausschnitts aus einem Dampfkraftwerk mit einer Dampfturbine als Dampfkraftanlage 2, einem Kessel 4, der Wärme an eine Überhitzerstufe, z.B. eines mehrstufigen Überhitzers 6, abgibt, der von Dampf 8 durchströmt wird. Durch die Aufnahme von Wärme wird der Dampf 8 im Überhitzer 6 zu Frischdampf 10 überhitzt und anschließend der Dampfturbine zugeführt. Zur Regelung der Temperatur des Dampfs 8 ist ein Einspritzkühler 12 vorgesehen, der Wasser 14 in den Dampf 8 einspritzt und diesen so kühlt. Die Menge des eingespritzten Wassers 14 wird durch ein Regelventil 16 eingestellt. Ein Temperatursensor 18 und ein Drucksensor 20 messen die Temperatur $\vartheta_{NK}$ bzw. den Druck $p_{NK}$ des Dampfs 8 vor dem Überhitzer 6 und ein Temperatursensor 22 und ein Drucksensor 24 messen die Frischdampftemperatur $\vartheta_D$ bzw. den Frischdampfdruck $p_D$ des Frischdampfs 10 nach dem Überhitzer 6.

Lediglich zur Besseren Unterscheidung wird im Folgenden der Dampf 8 vor dem Überhitzer 6 als Dampf 8 und der Dampf 10 nach dem Überhitzer 6 als Frischdampf 10 bezeichnet, wobei hervorgehoben wird, dass die Erfindung in der im Folgenden beschriebenen Ausführungsform auf Dampf, den man gegebenenfalls nicht als Frischdampf bezeichnen würde, selbstverständlich ebenfalls anwendbar ist.

In FIG 2 ist eine Regelkaskade mit einer äußeren Kaskade 26 und einer inneren Kaskade 28 schematisch dargestellt. Die äußere Kaskade 26 umfasst einen LQG-Regler 30 dem als Eingangsgrößen die Frischdampftemperatur $\vartheta_D$ sowie deren Sollwert $\vartheta_{DS}$, der Frischdampfdruck $p_D$ und die Temperatur $\vartheta_{NK}$ bzw. den Druck $p_{NK}$ des Dampfs 8 zugeführt werden. Ein weiterer Eingang ist das aktuelle Lastsignal LA, das zur lastabhängigen Anpassung der Überhitzerzeitkonstanten benötigt wird. Die Frischdampftemperatur $\vartheta_D$ nach dem Überhitzer 6 ist die Regelgröße des LQG-Reglers 30. Die Solltemperatur $\vartheta_{NKS}$ wird als Stellgröße vom LQG-Regler 30 ausgegeben.

Die Solltemperatur $\vartheta_{NKS}$ des Dampfs 8 wird einem Regelkreis 32 der inneren Kaskade 28 als Sollwert vorgegeben. Die Temperatur $\vartheta_{NK}$ des Dampfs 8 nach dem Einspritzkühler 12 ist die Regelgröße des Regelkreises 32. Regelkreis 32 hat eine Stellung des Regelventils 16 des Einspritzkühlers 12 als Stellgröße und regelt mit Hilfe der in den Dampf 8 eingespritzten Wassermenge 14 die Temperatur $\vartheta_{NK}$.

Der LQG-Reglers 30 wirkt nicht direkt über ein Stellorgan auf den Prozess ein, sondern übergibt den Sollwert $\vartheta_{NKS}$ für die Temperatur nach dem Einspritzkühler 12 an den unterlagerten Regelkreis 32, mit dem er somit eine Kaskade aus äußerer Kaskade 26 und innerer Kaskade 28 bildet. Die gemessene Temperatur $\vartheta_{NK}$ nach dem Einspritzkühler 12 wird vom LQG-Regler 30 als zusätzliche Information benötigt, ebenso wie der Dampfdruck $p_{NK}$ nach dem Einspritzkühler 12 und der Frischdampfdruck $p_D$, da aus Temperaturen und Drücken intern Enthalpien errechnet werden. Eine Sattdampf-Begrenzung des Temperatursollwertes $\vartheta_{NKS}$ nach Kühler 12 erfolgt außerhalb des LQG-Reglerbausteins 30.

Zur Parametrierung des LQG-Reglers 30 wird eine Zeitkonstante $T_{100}$ benötigt, die das Überhitzerzeitverhalten bei Volllast beschreibt. Eine Änderung der Dampftemperatur $\vartheta NK$ am Überhitzereintritt wirkt sich dabei in etwa derart auf die Frischdampftemperatur $\vartheta_D$ aus, wie es eine Verzögerung durch drei PT$_1$-Glieder mit jeweils der Zeitkonstanten $T_{100}$ beschreibt. Des Weiteren wird eine Zeitkonstante $T_{mess}$ benötigt, die das Zeitverhalten der Frischdampftemperaturmessung beschreibt.

Das Verhalten des Reglers wird über die zwei Einstellwerte R und $R_K$ parametriert, die die Empfindlichkeit des Zustandsreglers und des Kalmanfilters beschreiben.

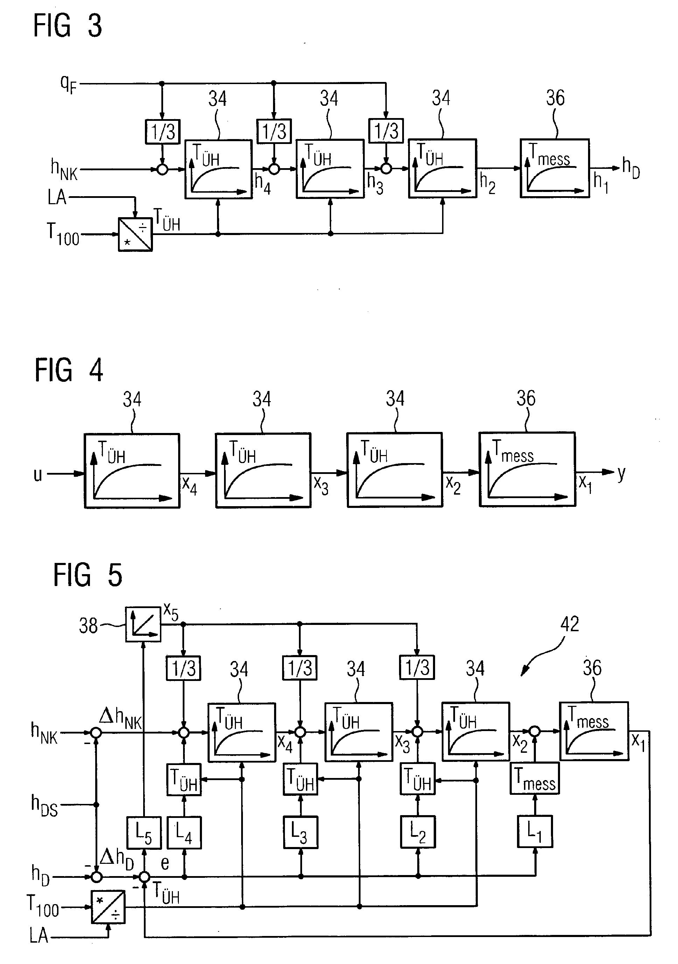

FIG 3 zeigt ein Modell der Überhitzerstrecke im Überhitzer 6, das aus drei PT$_1$-Gliedern 34 besteht. Als PT$_1$-Glied 34 wird im Folgenden ein lineares Übertragungsglied verstanden, das eine zeitliche Verzögerung erster Ordnung aufweist. Die drei PT$_1$-Glieder 34 bilden das Übergangsverhalten einer Verzögerung von der spezifischen Enthalpie $h_{NK}$ am Eintritt des Überhitzers 6, also nach dem Kühler 12, auf die spezifische Enthalpie $h_D$ des Frischdampfs 10 ab. Hierbei wird mit Enthalpien anstelle von Temperaturen gerechnet, da dadurch die Annahme eines linearen Verhaltens gerechtfertigt ist. Als Zeitkonstante $T_{ÜH}$ für die PT$_1$-Glieder 34 dient der Quotient aus $T_{100}$ und dem Lastsignal LA, womit das lastabhängige Zeitverhalten des Überhitzers angenähert wird. Bei geringerer Last verringert sich die Strömungsgeschwindigkeit des Dampfes 8 durch den Überhitzer und das Übertragungsverhalten wird entsprechend träger.

Die Wärmezufuhr $q_F$ aus dem Kessel 4 führt zu einer dampfseitigen Enthalpieerhöhung über den Überhitzer 6. Im Modell erfolgt dies durch Addition je eines Drittels der spezifischen Wärmezufuhr am Eingang jedes PT$_1$-Gliedes 34. Die Messgliedverzögerung bei der Frischdampftemperaturmessung ist durch ein weiteres PT$_1$-Glied 36 mit der Zeitkonstante $T_{mess}$ modelliert. Eine Stellglieddynamik ist im Modell, das dem Zustandsregler, also einem Teil des LQG-Reglers 30, zugrunde gelegt wird, bewusst nicht vorhanden.

Die Wärmezufuhr $q_F$ aus dem Kessel 4 stellt beim betrachteten Modell eine Störgröße dar, die nicht direkt gemessen wird. Es ist daher bei Reglern bekannt, eine dynamische Erweiterung der Strecke durchzuführen. Dieses Hinzufügen eines I-Anteils ermöglicht die Vermeidung von bleibenden Regelabweichungen. Da $q_F$ allerdings keine sich langsam ändernde Größe ist, sondern ein Großteil der auf den Überhitzer 6 einwirkenden fluktuierenden Störungen ausmacht, werden auf diese Weise vom Feuer herrührende Störungen vor allem über diesen I-Anteil ausgeregelt, und nicht über den eigentlichen Zustandsregler.

Beim LQG-Regler 30 wird die Störgröße $q_F$ von einem eingesetzten Beobachter rekonstruiert und entsprechend aufgeschaltet, so dass die dynamische Erweiterung des Streckenmodells um einen abschließenden 1-Anteil nicht notwendig ist.

Die Regelgröße des LQG-Reglers 30 ist die Temperatur des Frischdampfes $\vartheta_D$. Da der hier betrachtete Zustandsregler jedoch auf einem Modell mit Enthalpien basiert, wird die Frischdampftemperatur $\vartheta_D$ mit Hilfe des Frischdampfdrucks $p_D$ und einer Wasserdampftafel in die spezifische Enthalpie $h_D$ des Frischdampfes 10 umgerechnet. Für den linearen Zustandsregler ist also $h_D$ die Regelgröße.

Der betrachtete Zustandsregler soll nicht direkt auf das Einspritzkühler-Regelventil 16 einwirken. Es soll die bewährte Kaskadenstruktur erhalten bleiben, bei der der unterlagerte Regelkreis 32, z.B. ein PI-Regler, mittels des Regelventils 16 die Temperatur $\vartheta_{NK}$ nach dem Einspritzkühler 12 auf einen Sollwert $\vartheta_{NKS}$ regelt. Dieser Sollwert $\vartheta_{NKS}$ ist also die Stellgröße für die äußere Kaskade, die durch den Zustandsregler gebildet wird. Der Sollwert $\vartheta_{NKS}$ wird dabei wiederum unter Zuhilfenahme des Drucks und der Wasserdampftafel aus der Enthalpie $h_{NKS}$ gebildet. Der lineare Zustandsregler hat damit die Stellgröße $h_{NKS}$.

Ein Zustandsregler bildet seinen Reglerausgang als gewichtete Summe der Zustände des Streckenmodells. Im hier modellierten Fall sind dies die Ausgänge der vier $PT_1$-Glieder 34, 36, in FIG 3 mit $h_1$ bis $h_4$ gekennzeichnet.

Für die Regelung verwendet werden jedoch nicht die vier Zustände $h_1$ bis $h_4$ direkt, sondern die Abweichung der Zustände von ihrem Arbeitspunkt. Für $h_1$ und $h_2$ ist dieser Arbeitspunkt durch den Enthalpie Sollwert $h_{DS}$ gegeben, für $h_3$ und $h_4$ liegt er um 1/3 $q_F$ bzw. 2/3 $q_F$ darunter. Die mit $k_1$ bis $k_4$ gewichtete Summe ergibt sich damit zu

$$A_1 = k_1(h_1 - h_{DS}) + k_2(h_2 - h_{DS}) + k_3(h_3 - h_{DS} - \frac{1}{3}q_F) + k_4(h_4 - h_{DS} - \frac{2}{3}q_F)$$

$$= k_1(h_1 - h_{DS}) + k_2(h_2 - h_{DS}) + k_3(h_3 - h_{DS}) + k_4(h_4 - h_{DS}) - \frac{1}{3}(k_3 + 2k_4)q_F$$

$$= \sum_{i=1}^{4} k_i(h_i - h_{DS}) - \frac{1}{3}(k_3 - 2k_4)q_F$$

Die Abweichung jedes Zustands von seinem Arbeitspunkt - und damit auch die gewichtete Summe $A_1$ - wird im Arbeitspunkt zu Null, d.h. es erfolgt kein Reglereingriff. Die Stellgröße $h_{NKS}$ sollte im Arbeitspunkt jedoch nicht Null sein, sondern um den Betrag der Wärmeaufnahme $q_F$ unter dem Enthalpie-Sollwert des Frischdampfs $h_{DS}$ liegen. Mit diesem Offset ergibt sich schließlich das Regler-Gesetz

$$h_{NKS} = h_{DS} - q_F - A_1$$

$$= h_{DS} - (1 - \frac{1}{3}k_3 - \frac{2}{3}k_4)q_F - \sum_{i=1}^{4} k_i(h_i - h_{DS}) \qquad (1)$$

Die Wärmeaufnahme $q_F$ kann hierbei als Störgröße betrachtet werden, die mit

$$k_5 = 1 - \frac{1}{3}k_3 - \frac{2}{3}k_4 \qquad (2)$$

gewichtet aufgeschaltet wird. Durch die Störgrößenaufschaltung $k_5 q_F$ wird zudem kompensiert, dass sich die Sollwerte für $h_3$ und $h_4$ von $h_{DS}$ unterscheiden. Der Term $h_{DS} - k_5 q_F$ kann als Steuerzweig aufgefasst werden, und als Rückführung verbleibt:

$$-\sum_{i=1}^{4} k_i(h_i - h_{DS}) = -\sum_{i=1}^{4} k_i x_i \quad \text{mit} \quad x_i = (h_i - h_{DS}), \ i = 1, \ ..., \ 4 \qquad (3)$$

Das Eigenverhalten der Regelstrecke ist nur durch eine Rückführung beeinflussbar. Daher wird im Folgenden ein Streckenmodell betrachtet, aus dem der Steuerzweig und die Störgröße eliminiert wurden. Es ergibt sich eine Kette von $PT_1$-Gliedern 34, 36, wie in FIG 4 dargestellt ist.

In Matrizenschreibweise wird die Kette von $PT_1$-Gliedern 34, 36 durch eine Zustandsraumdarstellung der Form

$$\dot{\mathbf{x}}(t) = \mathbf{A}\mathbf{x}(t) + \mathbf{b}u(t)$$

$$y(t) = \mathbf{c}^T \mathbf{x}(t)$$

repräsentiert, mit dem Zustandsvektor

$$\mathbf{x}(t) = \begin{bmatrix} x_1(t) \\ x_2(t) \\ x_3(t) \\ x_4(t) \end{bmatrix}$$

und den Systemmatrizen

$$\mathbf{A} = \begin{bmatrix} \dfrac{-1}{T_{mess}} & \dfrac{1}{T_{mess}} & 0 & 0 \\ 0 & \dfrac{-1}{T_{\ddot{U}H}} & \dfrac{1}{T_{\ddot{U}H}} & 0 \\ 0 & 0 & \dfrac{-1}{T_{\ddot{U}H}} & \dfrac{1}{T_{\ddot{U}H}} \\ 0 & 0 & 0 & \dfrac{-1}{T_{\ddot{U}H}} \end{bmatrix}, \mathbf{b} = \begin{bmatrix} 0 \\ 0 \\ 0 \\ \dfrac{1}{T_{\ddot{U}H}} \end{bmatrix} \text{ und } \mathbf{c}^T = \begin{bmatrix} 1 & 0 & 0 & 0 \end{bmatrix}.$$

Das Eigenverhalten der Strecke wird durch die Eigenwerte der A-Matrix repräsentiert, die gleichbedeutend mit den Polen der Übertragungsfunktion sind. Es ergeben sich ein Pol bei -1/$T_{mess}$ und ein dreifacher Pol bei -1/$T_{\ddot{U}H}$. Da alle Pole einen negativen Realteil haben, ist die Strecke stabil. Da die Imaginärteile aller Pole Null sind, also kein konjugiertkomplexes Pol-Paar existiert, ist die Strecke nicht schwingungsfähig, d.h. es kann kein Überschwingen auftreten. Die Geschwindigkeit eines Einschwingens bzw. Abklingens wird schließlich durch die Beträge der Realteile der Pole beschrieben.

Wird der Regelkreis durch die Zustandsrückführung

$$u = -\sum_{j=1}^{4} k_j x_j = -\mathbf{k}^T \mathbf{x} \tag{4}$$

mit der Regelverstärkung

$$\mathbf{k}^T = \begin{bmatrix} k_1 & k_2 & k_3 & k_4 \end{bmatrix}$$

geschlossen, ergibt sich

$$\mathbf{x}(t) = (\mathbf{A} - \mathbf{b}\mathbf{k}^T)\mathbf{x}(t) \ .$$

Das Eigenverhalten des geschlossenen Regelkreises wird durch die Eigenwerte der Matrix $(\mathbf{A} - \mathbf{b}\mathbf{k}^T)$ repräsentiert. Durch entsprechende Wahl der Reglerverstärkung $k^T$ ändern sich diese Eigenwerte, also die Pole des geschlossenen Regelkreises, und damit auch das Verhalten der Strecke. Beispielsweise macht ein Verschieben der Pole "nach Links", d.h. ein stärker negativer Realteil, die Strecke schneller.

Für die Wahl der Reglerverstärkung $k^T$ wird eine angemessene Methodik benötigt. Das LQ-Regelproblem formuliert einen Kompromiss aus Stellaufwand und Regelgüte, verzichtet allerdings auf ein Erzwingen des aperiodischen Verhaltens und erzielt dadurch eine deutlich höhere Robustheit.

Die Bewertung der Regelgüte und des Stellaufwandes erfolgt im Kostenfunktional

$$1 = \int_{t=0}^{\infty} \left[ \mathbf{x}(t)\mathbf{Q}\mathbf{x}(t) + u(t)ru(t) \right] dt.$$

Abweichungen der Zustände werden dabei quadratisch mit der Matrix **Q,** der quadratische Stellaufwand mit r gewichtet und über die Zeit aufintegriert. Betrachtet man beispielsweise eine ungeregelte stabile Strecke wie die Überhitzerstrecke aus FIG 4, so klingt eine Anfangsstörung der Zustände mit der Zeit vollständig ab. Das Funktional nimmt einen gewissen endlichen Wert an. Wird nun der Regelkreis geschlossen und dadurch ein schnelleres Abklingverhalten bewirkt, so wird in der Regel auch der Beitrag der Zustände zum Wert des Funktionals kleiner, die Regelgüte wird besser. Allerdings kommt nun noch der Stellaufwand zum Ausregeln der Anfangsstörung hinzu. Bei einem sehr aggressiven Regler kann das Kostenfunktional somit sogar einen größeren Wert annehmen als bei der ungeregelten Strecke. Eine Minimierung des Kostenfunktionals stellt somit einen Kompromiss zwischen Regelgüte und Stellaufwand dar.

Da die Regelgüte durch eine gewichtete quadratische Summe der Zustände erfolgt, kann über die Wahl der Matrix **Q** Einfluss darauf genommen werden, was als "gutes Regelverhalten" gilt. In der Regel wird nur die Hauptdiagonale von **Q** besetzt sein, womit die Quadrate der einzelnen Zustände bewertet werden, nicht jedoch Produkte aus zwei Zuständen. Die Gewichtung des Stellaufwands erfolgt über den Faktor r. Um das Verhältnis zwischen Regelgüte und Stellaufwand zu beeinflussen, genügt es, r zu variieren und **Q** unverändert zu lassen. Beispielsweise ließe sich eine Verdopplung jedes Eintrags in **Q** ausklammern und äquivalent durch eine Halbierung des Wertes von *r* ausdrücken, was dann einer Minimierung des 0,5-fachen Kostenfunktionals entspricht und auf dasselbe Ergebnis führt.

Das Minimierungsproblem bei dem das Reglergesetz

$$u(t) = -\boldsymbol{k}^{\mathrm{T}}\mathbf{x}(t)$$

angesetzt wird und die Regelverstärkung $\boldsymbol{k}^{\mathrm{T}}$ gesucht wird, für die das Kostenfunktional minimal wird, führt auf die Matrix-Riccati-Differentialgleichung (MRDGL) für eine Matrix $P(t)$ wie in zahlreicher Literatur beschrieben:

$$-\frac{d\mathbf{P}}{dt} = \mathbf{A}^{T}\mathbf{P} + \mathbf{P}\mathbf{A} - \frac{1}{r}\mathbf{P}\mathbf{b}\mathbf{b}^{T}\mathbf{P} + \mathbf{Q} \qquad (5)$$

Mit der stationären Lösung P dieser MRDGL ergibt sich dann schließlich die Reglerverstärkung $\boldsymbol{k}^{\mathrm{T}}$ zu

$$\mathbf{k}^{T} = \begin{bmatrix} k_1 & k_2 & k_3 & k_4 \end{bmatrix} = \frac{1}{r}\mathbf{b}^{T}\mathbf{P} . \qquad (6)$$

Im Folgenden wird der Beobachter beschrieben, auch als Störbeobachter oder Störgrößenbeobachter bezeichnet, da er die Störung beobachtet. FIG 5 zeigt die Struktur des Störgrößenbeobachter dar.

Der Zustandsregler bildet seinen Reglerausgang als gewichtete Summe der Streckenzustände. Im hier modellierten Fall sind dies die Ausgänge der vier $PT_1$-Glieder 34, 36. Da jedoch keine Messungen von Enthalpien entlang des Überhitzers 6 vorliegen, müssen diese mit Hilfe eines Beobachters rekonstruiert werden.

Die Rekonstruktion der Streckenzustände erfolgt durch die Berechnung eines dynamischen Streckenmodells parallel zum echten Prozess. Die Abweichung zwischen Messgrößen aus dem Prozess und den entsprechenden Werten, die mit dem Streckenmodell ermittelt werden, wird als Beobachterfehler e bezeichnet. Die einzelnen Zustände des Streckenmodells werden jeweils durch einen gewichteten Beobachterfehler korrigiert, wodurch dieser stabilisiert wird. Die Gewichtungen werden als Beobachterverstärkung $L_1$ - $L_5$ bezeichnet.

Als "Messgröße" dient in diesem Fall die spezifische Enthalpie $h_D$ des Frischdampfs, die aus der Frischdampftemperatur $\vartheta_D$ und dem Frischdampfdruck $p_D$ berechnet wird.

Als Streckenmodell wird ein im Vergleich zu FIG 3 leicht modifiziertes Beobachtermodell eingesetzt. Als Zustandsgrößen werden nicht die absoluten spezifischen Enthalpien gewählt, sondern deren Abweichung vom Enthalpie-Sollwert $h_{DS}$ für den Frischdampt 10, so wie die Zustände zuvor bei der Beschreibung des Zustandsreglers definiert wurden.

Ein Eingang in das Streckenmodell ist die spezifische Enthalpie $h_{NK}$ nach dem Kühler 12. Sie wird direkt aus dem Messwert der Temperatur $\vartheta_{NK}$ nach dem Kühler 12 und dem zugehörigen Druck $p_{NK}$ gebildet.

Der zweite Eingang ins Streckenmodell ist die Störgröße $q_F$, die nicht messbar ist, sondern rekonstruiert werden soll. Daher wird das Beobachtermodell an dieser Stelle um einen Zustand $x_5$ erweitert. Ein Integrator 38 liefert den geschätzten Wärmestrom ins Streckenmodell. Die einzige Beschaltung des Integratoreingangs ist der mit $L_5$ gewichtete Beobachterfehler zur Korrektur.

Die Systemmatrizen des Beobachtermodells - ohne die Rückführung durch die Beobachterverstärkungen - sind gegeben durch

$$
\mathbf{A}_O = \begin{bmatrix} \dfrac{-1}{T_{mess}} & \dfrac{1}{T_{mess}} & 0 & 0 & 0 \\[2ex] 0 & \dfrac{-1}{T_{ÜH}} & \dfrac{1}{T_{ÜH}} & 0 & \dfrac{1}{3T_{ÜH}} \\[2ex] 0 & 0 & \dfrac{-1}{T_{ÜH}} & \dfrac{1}{T_{ÜH}} & \dfrac{1}{3T_{ÜH}} \\[2ex] 0 & 0 & 0 & \dfrac{-1}{T_{ÜH}} & \dfrac{1}{3T_{ÜH}} \\[2ex] 0 & 0 & 0 & 0 & 0 \end{bmatrix} , \quad \mathbf{b}_O = \begin{bmatrix} 0 \\ 0 \\ 0 \\ \dfrac{1}{T_{ÜH}} \\ 0 \end{bmatrix} \quad \text{und} \quad \mathbf{c}_O^{\ T} = \begin{bmatrix} 1 & 0 & 0 & 0 & 0 \end{bmatrix}.
$$

Das tief gestellte O steht dabei für Observer. Es fällt auf, dass der Zustand $x_5$, der den Wärmestrom $q_F$ repräsentiert, nicht steuerbar ist, wohl jedoch beobachtbar.

Der hier vorgestellte Störgrößenbeobachter benötigt zur Rekonstruktion der Streckenzustände ($x_1$ bis $x_4$) und der Störgröße ($x_5$) lediglich Messwerte bzw. von Messwerten abgeleitete Größen - die spezifische Enthalpie $h_{NK}$ vor und $h_D$ nach dem Überhitzer 6. Es werden keine Stellsignale eines Reglers benötigt, da er kein Modell der Stellglieddynamik beinhaltet. Somit kann ein im Leittechniksystem implementierter Beobachter jederzeit mitlaufen, unabhängig davon, was für eine Regelstruktur im Eingriff ist, d.h. eine Abschaltung des Zustandsreglers oder der zeitweiliger Ersatz durch eine andere Regelstruktur beeinflusst den Beobachter nicht.

Die Beobachterverstärkung, in FIG 5 durch die Gewichtungen $L_1$ bis $L_5$ gekennzeichnet, wird so gewählt, dass der Beobachterfehler e stabilisiert wird und entsprechend schnell abklingt. Dies entspricht der Regelung des dualen Systems (mit den Systemmatrizen $\mathbf{A}_D = \mathbf{A}_O^T$, $\mathbf{b}_D = \mathbf{c}_O$ und $\mathbf{c}_D^T = \mathbf{b}_O^T$, Index D für dual) durch einen Zustandsregler.

Erfolgt die Auslegung der Beobachterverstärkungen nicht durch eine feste Vorgabe der Beobachterpole sondern durch den Entwurf eines LQR für das duale System, erhält man einen Kalman-filter. Die Gewichtungen $\mathbf{Q}_O$ und $r_O$ entsprechen dann den Kovarianzen des Systemrauschens und des Messrauschens.

Die zugehörige Matrix-Riccati-Differentialgleichung lautet, analog zum LQR-Entwurf

$$
-\frac{d\mathbf{P}_O}{dt} = \mathbf{A}_D^T \mathbf{P}_O + \mathbf{P}_O \mathbf{A}_D - \frac{1}{r_O} \mathbf{P}_O \mathbf{b}_D \mathbf{b}_D^T \mathbf{P}_O + \mathbf{Q}_O
$$

und die Beobachterverstärkung ergibt sich mit der stationären Lösung $\mathbf{P}_O$ zu

$$\mathbf{L} = \begin{bmatrix} L_1 \\ L_2 \\ L_3 \\ L_4 \\ L_5 \end{bmatrix} = \left( \frac{1}{r_O} \mathbf{b}_D{}^T \mathbf{P}_O \right)^T . \qquad (7)$$

Diese Gleichung des Rückführvektors **L** mit dem konstanten Parameter $\mathbf{b}_D{}^T$ dient zu Berechnung der Beobachterverstärkung $L_1$ bis $L_5$.

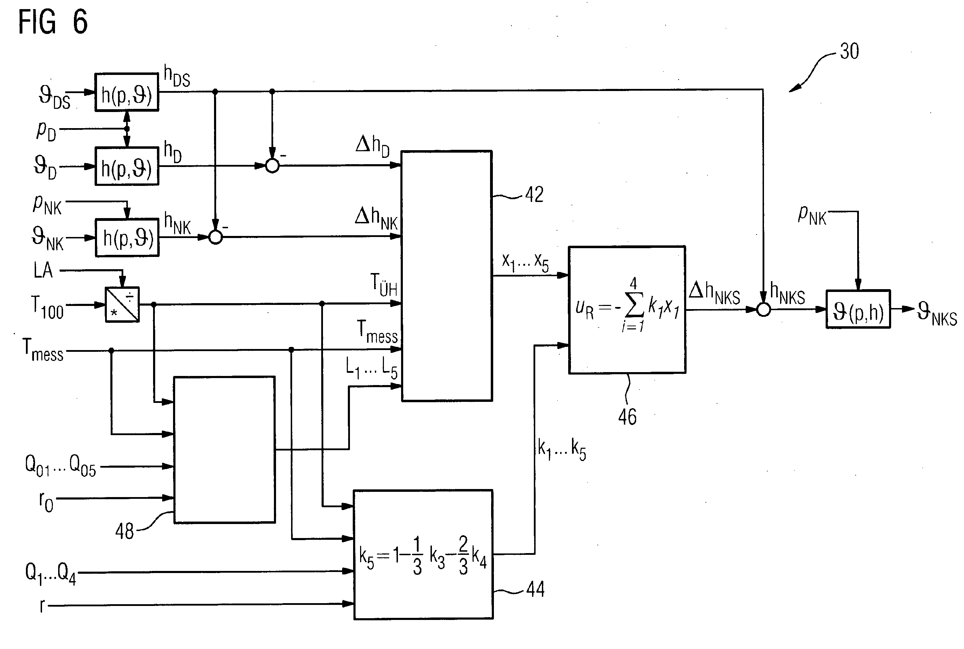

Eine Übersicht über den Aufbau des LQG-Regler 30 als Zustandsregler ist in FIG 6 dargestellt. Es erfolgt zunächst eine Umrechnung von Temperaturen auf Enthalpien mit Hilfe der Wasserdampftafel. Die Regelverstärkung $k_1$ bis $k_5$ und Beobachterverstärkung $L_1$ bis $L_5$ werden in Abhängigkeit von den Zeitkonstanten, den Einstellparametern und der Last der Dampfkraftanlage 2 berechnet.

Der in FIG 5 dargestellte Beobachter 42 liefert die Zustände $x_1$ bis $x_4$ sowie die beobachtete Störgröße $x_5 = q_F$. Die Reglerverstärkung $\mathbf{k}^T$ bzw. $k_1$ bis $k_4$ (Gleichung 6) sowie die Gewichtung $k_5$ der Störgrößenaufschaltung (Gleichung 2) liefert die MRDGL (Gleichung 5). Die Beobachterverstärkung **L** liefert ein MRDGL-Beobachter 48 aus Gleichung 7. Ein Zustandsregler 46 bewirkt die Rückführung gemäß der Gleichungen 1 - 4, wobei die Störgrößenaufschaltung $-k_5 x_5$ bereits in die Summendarstellung i = 1 - 5 des Zustandsreglers 46 integriert ist. Abschließend erfolgt erneut eine Umrechnung mit der Wasserdampftafel, um den Enthalpiesollwert $h_{NKS}$ nach dem Einspritzkühler 6 in einen Temperatursollwert zu überführen. Dieser kann dann für die Regelung des Einspritzventils verwendet werden.

Der in FIG 6 dargestellte Zustandregler 30 soll nicht durch konstante Verstärkungsfaktoren $k_1$ bis $k_4$ und $L_1$ bis $L_5$ parametriert werden, sondern durch die Zeitkonstanten der Strecke und das Einstellen der Gewichtungsfaktoren. Zudem sind die optimalen Verstärkungsfaktoren nicht konstant, da die Zeitkonstanten des Streckenmodells lastabhängig sind. Die Lösung der Matrix-Riccati-Gleichungen muss daher innerhalb der Leittechnik erfolgen, die zu jedem Zeitpunkt über die entsprechenden Parameter verfügt. Eine Vorabintegration der Matrix-Riccati-Differentialgleichungen (MRDGL) ist daher nicht sinnvoll.

Von den oben angeführten MRDGL wird für jeden Arbeitspunkt eigentlich nur die stationäre Lösung gesucht, d.h. die rechte Seite der MRDGL wird zu Null gesetzt und es folgt eine algebraische Riccati Gleichung (ARE). Für die Lösung dieser quadratischen Matrizengleichung gibt es performante Algorithmen, die sich jedoch nicht ohne Weiteres in eine Leittechnik implementieren lassen.

Daher wurde hier ein anderer Weg gewählt, der insbesondere dem zeitvarianten Charakter der Systemgleichungen durch die lastabhängigen Zeitkonstanten gerecht wird: die MRDGL wird durch Integration über die Zeit gelöst. Sie ist bei Vorwärtsintegration jedoch instabil und wird somit zweckmäßigerweise rückwärts in der Zeit integriert. Durch eine einfache Vorzeichenumkehr entsteht eine DGL, die bei Vorwärtsintegration stabil ist und dieselbe stationäre Lösung besitzt. Lediglich bei zeitvarianten Vorgängen, d.h. während Laständerungen und bei Änderung der Einstellparameter, weicht die durch Vorwärtsintegration gefundene Lösung vom theoretisch optimalen Lösungsverlauf ab, der sich nur durch Rückwärtsintegration bestimmen lässt.

Die Implementierung des oben vorgeschlagenen Reglerkonzepts in die Leittechnik erfolgt durch Verschaltung von Standardbausteinen, d.h. der vier Grundrechenarten und Integratoren. Diese Bausteine arbeiten in der Leittechnik ausschließlich mit skalaren Größen. Es existieren keine vektorwertigen oder gar matrixwertigen Signale und somit beispielsweise auch keine Bausteine für ein Produkt zweier Matrizen.

Daher werden die Matrix-Riccati-Differentialgleichungen, die zur Berechnung der Reglerverstärkung **k** und der Beobachterverstärkung **L** benötigt werden, in einen Satz skalarer Differentialgleichungen überführt. Dazu werden die Systemmatrizen für das konkrete Problem in die MRDGL eingesetzt und ausmultipliziert. Es ergeben sich skalare Gleichungen, für die einzelnen Matrixeinträge $\dfrac{d\mathbf{P}_{i,j}}{dt}$ .

Die MRDGL ist symmetrisch aufgebaut. Wenn bei der Gewichtungsmatrix **Q,** wie oben angesprochen, nur die Hauptdiagonale besetzt ist, ergibt sich daraus, dass die Matrixeinträge $P_{i,j}$ und $P_{j,i}$ auf den selben Wert konvergieren und von da an immer aufeinander liegen. Die Differentialgleichungen für diese Matrixeinträge sind entsprechend identisch, wenn man $P_{i,j} = P_{j,i}$ setzt. Macht man sich diese Symmetrieeigenschaft zunutze, genügt die Betrachtung einer Dreiecksmatrix.

Für die Berechnung der 4x4-Matrix **P** des Reglers genügen damit 10 skalare Differentialgleichungen anstelle von 16. Für die 5x5-Matrix $\mathbf{P}_O$ des Beobachters sind entsprechend 15 anstelle von 25 Differentialgleichungen ausreichend.

Die Beobachterverstärkungen können in einem Makro-Baustein 48 der Leittechnik zusammengefasst berechnet werden. Der Marko-Baustein benötigt somit die Einstellparameter $r_O$ und $Q_{O1}$ bis $Q_{O5}$, die Messgliedzeitkonstante $T_{mess}$ und die Überhitzerzeitkonstante $T_{ÜH}$, die sich aus $T_{100}$ und dem Lastsignal LA berechnet. Für jede der 15 Differentialgleichungen existiert ein eigenes Untermakro, das die rechte Seite der DGL implementiert und einen Integrator für den jeweiligen Zustand $P_{Oij}$ enthält.

Das Streckenmodell für den Beobachter 42 ist gemäß FIG 5 in einem Makroblock aufgebaut. Lediglich die Bildung der Enthalpieabweichungen erfolgt außerhalb des Makroblocks. Die PT$_1$-Glieder 34, 36 sind aus rückgekoppelten Integratoren mit der Zeitkonstante 1 Sekunde aufgebaut. Der Korrekturterm ($L_j$ $e$) wirkt direkt am Eingang jedes Integrators, wodurch eine Multiplikation mit der jeweiligen Zeitkonstante entfällt.

Die Umrechnung von Temperatur- auf Enthalpiewerte kann auf der äußersten Ebene des Regelbaustein-Makroblocks erfolgen. Der Aufruf der Wasserdampftafel erfordert neben der Temperatur noch den jeweils zugehörigen Druck. Dies ist für die Frischdampftemperatur der Frischdampfdruck und für die Temperatur nach dem Einspritzkühler der entsprechende Druck vor dem Überhitzer. Letzterer steht häufig nicht zur Verfügung, kann jedoch durch den Frischdampfdruck ersetzt werden, da der Druckverlust über den Überhitzer keinen nennenswerten Einfluss hat. Zwar ändert sich der absolute Enthalpiewert am Eintritt in den Überhitzer dadurch leicht, der hauptsächliche Enthalpiezuwachs über den Überhitzer ist jedoch durch die Wärmeaufnahme gegeben. Zweck der Umrechnung in Enthalpien ist die Überführung in ein lineares System. Geringfügige Enthalpiefehler führen somit auf geringfügige Nichtlinearitäten. Durch Hin- und Rückrechnung mit dem gleichen Druckwert entstehen jedoch keinerlei Bilanzfehler.

Der Druck gibt bei der Umrechnung zwischen Temperaturen und Enthalpien eine Art Arbeitspunkt für die Linearisierung an. Er repräsentiert somit die Lastabhängigkeit der Umrechnung. Es ist daher nicht wichtig, dem Regelbaustein jede kleine Druckschwankung zuzuführen; vielmehr benötigt er den zur Last gehörigen "nominellen" Druck. Die häufig auftretenden schnellen Schwankungen in der Druckmessung sind daher ausreichend zu glätten, beispielsweise durch ein PT$_1$-Glied mit einer Zeitkonstante von zehn Minuten. Bei Verwendung von verschiedenen Drucksignalen für den Frischdampfdruck und den Druck nach Einspritzkühler ist auf eine gleichartige Glättung der beiden Signale zu achten.

Wie ausgeführt, ist der implementierte Regler optimal bezüglich eines Gütekriteriums, das die Regelgüte und den Stellaufwand berücksichtigt. Die Regelgüte wird durch die Gewichtungsmatrix Q, beziehungsweise im hier implementierten Fall durch die Diagonaleinträge $Q_1$ bis $Q_4$ bestimmt.

Der Einstellparameter r gewichtet den Stellaufwand im Gütekriterium in Relation zur Regelgüte. Ein größerer Wert hat dabei einen ruhigeren Stellverlauf bei gleichzeitigen Einbußen in der Regelgüte zufolge, ein kleinerer Wert führt zu einem schärferen Regelverhalten.

Die Wahl des Gütekriteriums ist unabhängig von den tatsächlichen Anlagen mit ihren unterschiedlichen Streckenzeitkonstanten. Theoretisch genügt bei der Anwendung des Regelbausteins auf einer anderen Anlage eine Anpassung der Zeitkonstanten. Allerdings könnte von Anlage zu Anlage durchaus ein unterschiedlich scharfes Regelverhalten gefordert sein. Der Hauptparameter hierfür ist r.

Die Kovarianzmatrix $\mathbf{Q}_O$ des Kalmanfilters gibt die Kovarianz des Zustandsrauschens des Beobachtermodells an. Auch hierbei sind wiederum nur die Diagonalelemente besetzt. Ein kleiner Wert der Kovarianz bedeutet, dass der jeweilige Zustand sehr gut durch die Modellgleichung beschrieben wird. Ein großer Wert hingegen bedeutet, dass es eine große stochastische Abweichung gibt. Im Falle des implementierten Beobachtermodells bilden die drei PT$_1$-Glieder 34, 36 das Übertragungsverhalten des Überhitzers relativ gut ab. Die zu beobachtende Störgröße, nämlich der spezifische Wärmestrom $q_F$, ist hingegen überhaupt nicht modelliert. Dieser Zustand ändert sich rein durch Störeinflüsse. Das Rauschen dieses Zustands hat also eine große Kovarianz.

Der verbleibende Einstellparameter $r_O$ gibt die Kovarianz des Messrauschens an. Diese ist wiederum im Verhältnis zur Kovarianz des Zustandsrauschens zu sehen. Ein großer Wert bedeutet, dass die Messung stark verrauscht ist, und stärker auf die Prädiktion des Beobachtermodells vertraut werden soll. Ein kleiner Wert $r_O$ besagt dagegen, dass die Messung gut ist, und ein eventuell auftretender Beobachterfehler entsprechend scharf zu korrigieren ist. Über $r_O$ kann also die Geschwindigkeit des Beobachters bzw. Kalmanfilters eingestellt werden. Eine Beschleunigung des Beobachters ist durch Verkleinerung von $r_O$ möglich.

**Patentansprüche**

1. Verfahren zum Regeln der Temperatur ($\vartheta_D$) von Dampf (8) für eine Dampfkraftanlage (2), bei dem ein Zustandsregler (46) mehrere Dampfzustände in einem Überhitzer (6) zum Überhitzen von Dampf (8) mit Hilfe eines Beobachters (42), der diese Zustände berechnet, zur Ausgabe einer Dampfsolltemperatur ($\vartheta_{NKS}$) als Stellgröße zurückführt, und die Dampfsolltemperatur ($\vartheta_{NKS}$) an einen weiteren Regler (32) zur Regelung der Temperatur weitergegeben wird, **dadurch gekennzeichnet, dass** der Zustandsregler (46) ein linear-quadratischer Regler ist.

**2.** Verfahren nach Anspruch 1,
**dadurch gekennzeichnet, dass** der Beobachter (42) ein Kalman-Filter ist, der auf die linear-quadratische Zustandsrückführung ausgelegt ist.

**3.** Verfahren nach Anspruch 1 oder 2,
**dadurch gekennzeichnet, dass** die Störgröße der durch den Überhitzer (6) in den Dampf (8) eingetragene Wärme ($q_F$) als Zustand ($x_5$) definiert und im Regelalgorithmus verwendet wird.

**4.** Verfahren nach einem der vorhergehenden Ansprüche,
**dadurch gekennzeichnet, dass** der Beobachter die im Überhitzer in den Dampf eingetragene Wärme ermittelt.

**5.** Verfahren nach einem der vorhergehenden Ansprüche,
**dadurch gekennzeichnet, dass** die im Überhitzer (6) in den Dampf (8) eingetragene Wärme ($q_F$) durch einen Integrator (38) ermittelt wird.

**6.** Verfahren nach einem der vorhergehenden Ansprüche,
**dadurch gekennzeichnet, dass** als Zustandsgrößen Enthalpien des Dampfs (8) verwendet werden.

**7.** Verfahren nach Anspruch 6,
**dadurch gekennzeichnet, dass** als Zustandsgrößen Abweichungen der absoluten Enthalpien von Enthalpie-Sollwerten verwendet werden.

**8.** Verfahren nach einem der vorhergehenden Ansprüche,
**dadurch gekennzeichnet, dass** durch eine Umrechnung von Temperaturmesswerten und Temperatursollwerten auf Enthalpien das mathematische Reglerproblem linearisiert wird.

**9.** Verfahren nach einem der vorhergehenden Ansprüche,
**dadurch gekennzeichnet, dass** die Zustandsrückführung über eine Matrixgleichung erfolgt, deren Parameter zumindest teilweise unter Verwendung aktueller Messwerte bestimmt werden.

**10.** Verfahren nach Anspruch 9,
**dadurch gekennzeichnet, dass** die Matrixgleichung durch eine Leittechnik der Dampfkraftanlage berechnet wird.

**11.** Verfahren nach Anspruch 9 oder 10,
**dadurch gekennzeichnet, dass** die Matrixgleichung in einen Satz skalarer Differentialgleichungen überführt wird.

**12.** Verfahren nach Anspruch 11,
**dadurch gekennzeichnet, dass** der Satz skalarer Differentialgleichungen durch Integration mit umgekehrtem Vorzeichen gelöst wird.

**13.** Verfahren nach einem der vorhergehenden Ansprüche,
**dadurch gekennzeichnet, dass** der Beobachter (42) unabhängig vom Zustandsregler (46) arbeitet.

**14.** Verfahren nach einem der vorhergehenden Ansprüche,
**dadurch gekennzeichnet, dass** zur Zustandsberechnung ein Modell der Regelstrecke des Überhitzers (6) verwendet wird, deren zeitliche Verzögerung durch einen Quotient aus einer Zeitkonstante und einem Lastsignal (LA) der Dampfkraftanlage (2) bestimmt wird.

**15.** Vorrichtung zum Regeln der Temperatur ($\vartheta_D$) von Dampf (8) für eine Dampfkraftanlage (2) mit einem Zustandsregler (46) zur Ausgabe einer Dampfsolltemperatur ($\vartheta_{NKS}$) als Stellgröße durch Zurückführen mehrerer Dampfzustände eines Überhitzers (6) zum Überhitzen des Dampfs (8), einem Beobachter (42), der diese Zustände berechnet, und einem weiteren Regler (32) zur Regelung der Temperatur ($\vartheta_{NK}$) anhand der Dampfsolltemperatur ($\vartheta_{NKS}$),
**dadurch gekennzeichnet, dass** der Zustandsregler (46) ein linear-quadratischer Regler ist.

**Claims**

**1.** Method for controlling the temperature ($\vartheta_D$) of steam (8) for a steam power plant (2), wherein a state controller (46) feeds back a plurality of steam states in a superheater (6) for superheating the steam (8) using an observer (42), which calculates said states, feeds said states back for the output of a steam target temperature ($\vartheta_{NKS}$) as a manipulated variable and the steam target temperature ($\vartheta_{NKS}$) is forwarded to a further controller (32) for controlling the temperature, **characterised in that** the state controller (46) is a linear quadratic regulator.

2. Method according to claim 1,
   **characterised in that** the observer (42) is a Kalman filter, which is designed for linear quadratic state feedback.

3. Method according to claim 1 or 2,
   **characterised in that** the disturbance variable of the heat ($q_F$) transferred by the superheater (6) to the steam (8) is defined as a state ($x_5$) and is used in the control algorithm.

4. Method according to one of the preceding claims,
   **characterised in that** the observer determines the heat transferred in the superheater to the steam.

5. Method according to one of the preceding claims,
   **characterised in that** the heat ($q_F$) transferred to the steam (8) in the superheater (6) is determined by an integrator (38).

6. Method according to one of the preceding claims,
   **characterised in that** enthalpies of the steam (8) are used as state variables.

7. Method according to claim 6,
   **characterised in that** deviations of the absolute enthalpies from the enthalpy target values are used as state variables.

8. Method according to one of the preceding claims,
   **characterised in that** the mathematical controller problem is linearised by converting measured temperature values and temperature target values to enthalpies.

9. Method according to one of the preceding claims,
   **characterised in that** the state feedback takes place via a matrix equation, the parameters of which are determined at least partially using updated measured values.

10. Method according to claim 9,
    **characterised in that** the matrix equation is calculated by means of control technology of the steam power plant.

11. Method according to claim 9 or 10,
    **characterised in that** the matrix equation is converted into a set of scalar differential equations.

12. Method according to claim 11,
    **characterised in that** the set of scalar differential equations is solved by integration with signs reversed.

13. Method according to one of the preceding claims,
    **characterised in that** the observer (42) functions independently of the state controller (46).

14. Method according to one of the preceding claims,
    **characterised in that** for state calculation, a model of the controlled system of the superheater (6) is used, the temporal delay of which is determined by means of a quotient of a time constant and a load signal (LA) of the steam power plant (2).

15. Device for controlling the temperature ($\vartheta_D$) of steam (8) for a steam power plant (2) with a state controller (46) for outputting a steam target temperature ($\vartheta_{NKS}$) as the manipulated variable by feeding back a plurality of steam states of a superheater (6) for superheating the steam (8), an observer (42) which calculates said states, and a further controller (32) for controlling the temperature ($\vartheta_{NK}$) on the basis of the steam target temperature ($\vartheta_{NKS}$),
    **characterised in that** the state controller (46) is a linear quadratic controller.

**Revendications**

1. Procédé de réglage de la température ( $\vartheta_D$ ) de la vapeur ( 8 ) pour une centrale ( 2 ) à vapeur, dans lequel un régleur ( 46 ) d'état asservit plusieurs états de la vapeur dans un surchauffeur ( 6 ) pour surchauffer de la vapeur ( 8 ) à l'aide d'un observateur ( 42 ) qui calcule ces états comme grandeur de réglage pour l'émission d'une température ( $\vartheta_{NKS}$ ) de consigne de la vapeur et achemine la température ( $\vartheta_{NKS}$ ) de consigne de la vapeur à un autre régleur ( 32 ) pour le réglage de la température,
**caractérisé en ce que** le régleur ( 46 ) d'état est un régleur linéaire-quadratique.

2. Procédé suivant la revendication 1,
**caractérisé en ce que** l'observateur ( 42 ) est un filtre de Kalman, qui est conçu pour l'asservissement d'état linéaire-quadratique.

3. Procédé suivant la revendication 1 ou 2,
**caractérisé en ce que** la grandeur perturbatrice de la chaleur ( $q_F$ ) apportée par le surchauffeur ( 6 ) à la vapeur ( 8 ) est définie comme un état ( $x_5$ ) et est utilisée dans l'algorithme de réglage.

4. Procédé suivant l'une des revendications précédentes,
**caractérisé en ce que** l'observateur détermine la chaleur rapportée à la vapeur dans le surchauffeur.

5. Procédé suivant l'une des revendications précédentes,
**caractérisé en ce que** la chaleur ( $q_F$ ) apportée à la vapeur ( 8 ) dans le surchauffeur ( 6 ) est déterminée par un intégrateur ( 38 ).

6. Procédé suivant l'une des revendications précédentes,
**caractérisé en ce qu'**on utilise des enthalpies de la vapeur ( 8 ) comme grandeurs d'état.

7. Procédé suivant la revendication 6,
**caractérisé en ce qu'**on utilise, comme grandeurs d'état, des écarts des enthalpies absolues à des valeurs de consigne d'enthalpie.

8. Procédé suivant l'une des revendications précédentes,
**caractérisé en ce qu'**on linéarise le problème mathématique du régleur par une conversion de valeurs de mesure de température et des valeurs de consigne de température en des enthalpies.

9. Procédé suivant l'une des revendications précédentes,
**caractérisé en ce qu'**on effectue l'asservissement d'état par une équation matricielle, dont les paramètres sont déterminés, au moins en partie, en utilisant des valeurs de mesure présentes.

10. Procédé suivant la revendication 9,
**caractérisé en ce qu'**on calcule l'équation matricielle par une technique de conduite de la centrale à vapeur.

11. Procédé suivant la revendication 9 ou 10,
**caractérisé en ce qu'**on transforme l'équation matricielle en un jeu d'équations différentielles scalaires.

12. Procédé suivant la revendication 11,
**caractérisé en ce qu'**on résout le jeu d'équations différentielles scalaires par intégration avec inversion de signe.

13. Procédé suivant l'une des revendications précédentes,
**caractérisé en ce que** l'observateur ( 42 ) opère indépendamment du régleur ( 46 ) d'état.

14. Procédé suivant l'une des revendications précédentes,
**caractérisé en ce que**, pour le calcul d'état, on utilise un modèle du système asservi du surchauffeur ( 6 ), dont le retard dans le temps est déterminé par un quotient d'une constante de temps par un signal ( LA ) de charge de la centrale ( 2 ) à vapeur.

15. Dispositif de réglage de la température ( $\vartheta_D$ ) de la vapeur ( 8 ) pour une centrale ( 2 ) à vapeur, comprenant un régleur ( 46 ) d'état pour l'émission d'une température ( $\vartheta_{NKS}$ ) de consigne de la vapeur comme grandeur de réglage par asservissement de plusieurs états de la vapeur d'un surchauffeur ( 6 ) pour surchauffer la vapeur ( 8 ), un observateur ( 42 ) qui calcule ces états et un autre régleur ( 32 ) de réglage de la température ( $\vartheta_{NK}$ ) au moyen de la température ( $\vartheta_{NKS}$ ) de consigne de la vapeur,
**caractérisé en ce que** le régleur ( 46 ) d'état est un régleur linéaire quadratique.

FIG 1

FIG 2

## FIG 3

## FIG 4

## FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2449998 A